# EUROPEAN PATENT APPLICATION

(11) **EP 3 838 958 A1**
(43) Date of publication of application: **23.06.2021**
(21) Application number: 20165033.0
(22) Date of filing: 23.03.2020
(51) Int. Cl.: C08G 18/12, C08G 18/16, C08G 18/18, C08G 18/24, C08G 18/28, C08G 18/32, C08G 18/48, C08G 18/71, C08G 18/72, C08G 18/75, C08G 18/76, C08G 18/79, C08J 7/04, C08K 5/00, C08L 83/04, C09D 7/00, C09D 7/20, C09D 175/08, C08K 3/013, C08K 3/22

(54) **ONE-COMPONENT SOLVENT-FREE ANTI-SAGGING POLYURETHANE WATERPROOF COATING, PRODUCTION SYSTEM AND PRODUCTION METHOD THEREOF**

(30) Priority: 17.12.2019 CN 201911301237
(71) Applicant: Jiangsu Canlon Building Materials Co., Ltd., Suzhou, Jiangsu 215234 (CN)
(72) Inventor: HE, Xiaogang, Suzhou, Jiangsu 215234 (CN); LI, Zhongren, Suzhou, Jiangsu 215234 (CN); ZHAO, Zubing, Suzhou, Jiangsu 215234 (CN); XU, Jiakang, Suzhou, Jiangsu 215234 (CN); MA, Shijie, Suzhou, Jiangsu 215234 (CN); HAN, Yu, Suzhou, Jiangsu 215234 (CN)
(74) Representative: de Arpe Fernandez, Manuel

(57) **Abstract**

A one-component solvent-free anti-sagging polyurethane waterproof coating, a production system and a production method thereof; the polyurethane waterproof coating comprises the following components in parts by weight of: 25-50 parts of a polyurethane prepolymer, 10-20 parts of a heavy filler, 10-20 parts of a nano-filler, 0.05-0.2 parts of a composite catalyst, 0.1-0.3 parts of a physical defoamer, 0.1-0.3 parts of a chemical defoamer, 5-20 parts of a plasticizer, 0.1-0.3 parts of a dispersant, 0.05-0.2 parts of a dehydrating agent, and 2-5 parts of a reactive diluent, the polyurethane prepolymer is made by reacting 19-72 parts of a composite resin diol, 1-10 parts of a polyether triol, 0-32 parts of a composite isocyanate, and 0.1-0.5 parts of an aliphatic amine chain extender. The polyurethane waterproof coating provided by the present disclosure can not only be applied to a facade or a slope, has a strong anti-sagging property, maintains good physical properties, but also enables continuous production and increases the operating efficiency.

## Description

### Technical Field

The present disclosure belongs to the technical field of polyurethane waterproof coatings, and more particularly, relates to a one-component solvent-free anti-sagging polyurethane waterproof coating, a production system and a production method thereof.

### Background Art

Polyurethane waterproof coating is a one-component polyurethane waterproof coating made by the addition polymerization of an isocyanate, and a polyether, etc., to form a prepolymer containing isocyanate groups, and compounding with a catalyst, an anhydrous additive, an anhydrous filler, and a solvent, etc., then processing same through procedures such as mixing, etc. Such coating is a reaction-curing coating, which has the characteristics of a high strength, a large elongation, and good water resistance, etc., and has a strong adaptability to the deformation of the base layer.

Currently, some large-scale projects in China, such as the south-to-north water diversion project, the basement walls of large-scale system venues, high-speed railways, subways, tunnels, and civil air defenses, etc., require waterproof application on the facades or slopes. Due to a facade or a slope, the application is made inconvenient and easily results in quality problems. The waterproof coating can be used to form a jointless waterproof layer, but the general-purpose coating will flow when it is painted on the facades or slopes, resulting in a thin upper part and a thicker lower part.

Currently, 99% of the production methods of polyurethane waterproof coatings are intermittent reaction kettle production methods; if high anti-sagging coatings are produced, due to the fact that in the production method for a reaction kettle, the coating can only flow out of the packaging by the gravity or an appropriate pressure, this will inevitably cause adhesion of the coating to the inner wall of the reaction kettle, the accumulation is getting thicker and thicker day by day, which will cause problems such as a slow heat transfer of the coating and an inaccurate temperature control, and the removal of crusts is usually made by boiling or manual entry. On the one hand, it is a waste of time and manpower, and on the other hand, it increases the loss of materials; moreover, the cleaned crust is a solid waste, and its treatment is more troublesome.

In conclusion, it is an urgent problem to be solved at present that how to design a polyurethane waterproof coating and a production system thereof, which can not only be applied to a facade or a slope, has a strong anti-sagging property, maintains good physical properties, but also enables continuous production and increases the operating efficiency.

### Summary of the Invention

An object of the present disclosure is to solve the technical problem that the existing polyurethane waterproof coating will flow when it is applied to a facade or a slope, and in the production methods of the existing polyurethane waterproof coating, the intermittent reaction kettle are mostly used; the one-component solvent-free anti-sagging polyurethane waterproof coating provided by the present disclosure can not only be applied to a facade or a slope, has a strong anti-sagging property, maintains good physical properties, but also enables continuous production and increases the operating efficiency.

The present disclosure achieves the foregoing objects through the following technical solution, a one-component solvent-free anti-sagging polyurethane waterproof coating, comprising the following components in parts by weight of: 25-50 parts of a polyurethane prepolymer, 10-20 parts of a heavy filler, 10-20 parts of a nano-filler, 0.05-0.2 parts of a composite catalyst, 0.1-0.3 parts of a physical defoamer, 0.1-0.3 parts of a chemical defoamer, 5-20 parts of a plasticizer, 0.1-0.3 parts of a dispersant, 0.05-0.2 parts of a dehydrating agent, and 2-5 parts of a reactive diluent, the polyurethane prepolymer is made by reacting 19-72 parts of a composite resin diol, 1-10 parts of a polyether triol, 0-32 parts of a composite isocyanate, and 0.1-0.5 parts of an aliphatic amine chain extender, and the nano-filler is any combination of gypsum whisker, fumed silica, nano-calcium carbonate, nano-aluminum nitride, nano-boron nitride, nano-aluminum borate, and hydrophobically modified gas silicon, and the weight ratio of the fumed silica to nano-calcium carbonate is 0.045-0.08 : 1.

Preferably, the composite resin diol comprises the following components in parts by weight of: 8-22 parts of a polypropylene oxide ether diol having a molecular weight of 400, 3-18 parts of a polypropylene oxide ether diol having a molecular weight of 1000, and 8-32 parts of a polypropylene oxide ether diol having a molecular weight of 2000.

Preferably, the polyether triol is a polypropylene oxide ether triol having a molecular weight of 3000-5000.

Preferably, the composite isocyanate comprises 0-10 parts of a first isocyanate and 0-8 parts of a second isocyanate, the first isocyanate is any one of pure diphenylmethane diisocyanate, isophorone diisocyanate, and a mixture of 2, 4'-diphenylmethane diisocyanate and 4,4'-diphenylmethane diisocyanate, and the second isocyanate is any one of a modified diphenylmethane diisocyanate, hexamethylene diisocyanate, and toluene diisocyanate.

Preferably, the reactive diluent is an oxazolidine reactive diluent.

Preferably, the composite catalyst comprises 0-10 parts of dibutyltin dilaurate, 0-3 parts of stannous octoate, 0-5 parts of an environmentally friendly non-butyltin catalyst, 0-10 parts of a bismuth carboxylate catalyst, 0-5 parts of zinc naphthenate, 0-5 parts of pentamethyldipropylenetriamine, 0-10 parts of tetramethylethylenediamine, and 0-8 parts of a bismorpholine organic amine catalyst.

Preferably, the dehydrating agent comprises 0-5 parts of a solid dehydrating agent and 0-3 parts of a liquid dehydrating agent, the solid dehydrating agent includes a molecular sieve or heavy calcium oxide, and the liquid dehydrating agent includes a small molecular p-toluenesulfonyl isocyanate dehydrating agent.

Preferably, the plasticizer is any one of diisononyl phthalate, diisodecyl phthalate, chlorinated paraffin, a vegetable oil, dioctyl adipate, glycol benzoate, trioctyl phosphate and phenyl alkylsulfonate.

Preferably, the chemical defoamer comprises 0-5 parts of magnesium oxide and 0-2 parts of calcium oxide.

A production system for a one-component solvent-free anti-sagging polyurethane waterproof coating includes a reaction kettle, a kneader, a forced feeder, a twin screw mixer, and a packaging machine, wherein both the reaction kettle and the kneader are connected to the forced feeder, the forced feeder is connected to the twin screw mixer and the twin screw mixer is connected to the packaging machine.

Preferably, the forced feeder is provided with a first feeding port, a second feeding port, a third feeding port and a discharging port.

Preferably, the first feeding port is connected to the reaction kettle, the second feeding port is connected to the kneader, the third feeding port is used for feeding raw materials, and the discharging port is connected to the twin screw mixer.

Preferably, the reaction kettle, kneader and the twin screw mixer can be heated up and cooled down, and evacuated.

A production method for the one-component solvent-free anti-sagging polyurethane waterproof coating includes the steps of:
(1) Preparation of polyurethane prepolymer:
   A. adding a formulation amount of composite resin diol to the reaction kettle, gradually increasing the temperature to 120°C under the stirring state, and vacuum dehydrating same for 2h;
   B. decreasing the temperature in the reaction kettle to no more than 60°C, continuing to add a formulation amount of composite isocyanate to the reaction kettle, and then increasing the temperature to 80 ± 2°C, reacting for 1.5h under nitrogen protection while stirring;
   C. continuing to add a formulation amount of polyether triol to the reaction kettle, after 1 hour of reaction, measuring the NCO content of the prepolymer; if it reaches the theoretical value, stopping the reaction, otherwise continuing the reaction; and
   D. adding a formulation amount of an aliphatic amine chain extender to the reaction kettle and continuing the reaction for 1 hour to obtain the polyurethane prepolymer;
(2) Vacuum dehydrating: dehydrating a formulation amount of heavy filler and nano-filler, respectively by a kneader under -0.1MPA vacuum conditions at 160°C to a moisture content of no more than 0.05% for later use;
(3) Synthesis of the polyurethane waterproof coating:
   A. adding the formulation amounts of the polyurethane prepolymer, heavy filler, nano-filler, plasticizer, dehydrating agent, reactive diluent, dispersant, physical defoamer and composite catalyst to the forced feeder according to the metered amounts, respectively, then uniformly mixing same; and
   B. adding the materials in the forced feeder to the twin-screw mixer according to the metered amounts, and stirring, dispersing, grinding and defoaming under the conditions of no more than 25°C and a vacuum degree of -0.09 to 0.1 MPa, and when the fineness of the material tested by the grindometer exceeds 50 um or more, the finished product is obtained; and
(4) Packaging: packing the finished product by a packaging machine according to the production needs.

Preferably, in step (1), the composite resin diol is controlled to have a moisture content of no more than 0.05% after vacuum dehydration.

Preferably, in step (2) further includes adding a chemical defoamer and dehydrating it together through a kneader.

Preferably, step (2) further includes adding a solid dehydrating agent and dehydrating same together through a kneader.

The beneficial effects of the present disclosure are as follows:
(1) the polyurethane waterproof coating designed by the present disclosure can not only be applied to a facade or a slope, has a strong anti-sagging property, but also can maintain good physical properties;
(2) the present disclosure further improves the anti-sagging property and other physical properties of the coating by controlling the proportion of the nano filler and the heavy filler;
(3) the polyurethane prepolymer prepared by stepwise polymerization in the present disclosure has a lower viscosity, and a high degree of polymerization, due to the relatively regular "soft segment" (polyether chain segment) and "hard segment" (isocyanate) in the prepolymer of the stepwise polymerization, and a narrow molecular weight distribution, and the low viscosity facilitates the production control;
(4) the effect of the moisture of various raw materials on the system is accurately controlled by the pre-treatment of various materials, which can reduce the moisture in the system reaction and mixing process and increase of the viscosity of the system by crosslinking; and
(5) the continuous automatic production of materials is achieved through the twin-screw automatic production line system, which can improve the production efficiency and ensure the product quality.

### Detailed Description of Embodiments

The technical solution in the examples of the present disclosure will be clearly and completely described below; obviously, the examples described are merely some, rather than all, of the examples of the present disclosure. Based on the embodiments of the present disclosure, all other embodiments obtained by those of ordinary skill in the art without involving any inventive effort fall within the scope of protection of the present disclosure.

In the following examples, unless otherwise specified, all raw materials are commercially available or prepared through conventional methods in the art.

The names of the raw materials that appear in the examples will now be described below:
1. DL-400: a polyether diol having a molecular weight of 400, produced by Shandong Bluestar Dongda Co., Ltd.
2. DL-1000D: a polyether diol having a molecular weight of 1000, produced by Shandong Bluestar Dongda Co., Ltd.
3. DL-2000D: a polyether diol having a molecular weight of 2000, produced by Shandong Bluestar Dongda Co., Ltd.
4. EP-330N: a polyether triol having a molecular weight of 5000, produced by Shandong Bluestar Dongda Co., Ltd.
5. MDI-MI: pure diphenylmethane diisocyanate, produced by BASF, Germany.
6. MDI 103c: modified diphenylmethane diisocyanate, produced by BASF, Germany.
7. MDI-50: a mixture of 2, 4'-diphenylmethane diisocyanate and 4,4'-diphenylmethane diisocyanate, a colorless to pink liquid at room temperature, and produced by Wanhua Chemical Group Co.,Ltd.
8. TDI: toluene diisocyanate, produced by Bayer, Germany.
9. IPDI: isophorone diisocyanate, produced by Wanhua Chemical Group Co., Ltd.
10. 066N: a physical defoamer, produced by BYK Chemical Company.
11. 5500: a physical defoamer, produced by Elementis Company.
12. DINP: a plasticizer with a chemical name of diisononyl phthalate, produced by Taiwan UPC Technology Corp.
13. WD50: a silane coupling agent, produced by Hubei Wuda Silicone Co., Ltd.
14. f108: a coating dispersant, produced by Hangzhou Lin'an Coating Auxiliary Chemical Co., Ltd.

### Example 1

This example provides a one-component solvent-free anti-sagging polyurethane waterproof coating; the components of the coating and the masses of various component are as follows:

| Total components | Parts by weight | Fractional components | | Mass/ kg |
|---|---|---|---|---|
| Polyurethane prepolymer | 40.2 | - | | 402.0 |
| Heavy filler | 15 | - | | 150.0 |
| Nano-filler | 10.5 | Fumed silica | Weight ratio: 0.05/1 | 5.0 |
| | | Nano-calcium carbonate | | 100.0 |
| Composite catalyst | 0.1 | Dibutyltin dilaurate | | 0.5 |
| | | Pentamethyldipropylenetriamine | | 0.3 |
| | | Stannous octoate | | 0.2 |
| Physical defoamer | 0.2 | 066N | | 2.0 |
| Chemical defoamer | 0.1 | Magnesium oxide | | 0.5 |
| | | Calcium oxide | | 0.5 |
| Plasticizer | 10 | DINP | | 100.0 |
| Dispersant | 0.1 | WD50 | | 1.0 |
| Dehydrating agent | 0.05 | Small molecular p-toluenesulfonyl isocyanate dehydrating agent | | 0.5 |
| Reactive diluent | 2 | - | | 20.0 |
| Total mass of: 782.5kg | | | | |

The components of the polyurethane prepolymer and the masses of various components are as follows:

| Total components | Fractional components | Weight ratio | Fractional components | Mass/ kg |
|---|---|---|---|---|
| Polyurethane prepolymer | Composite resin diol | 25 | DL-400 | 50.0 |
| | | | DL-1000D | 50.0 |
| | | | DL-2000D | 150.0 |
| | Polyether triol | 5 | EP-330N | 50.0 |
| | Composite isocyanate | 10 | MDI-MI | 50.0 |
| | | | MDI 103c | 50.0 |
| | Aliphatic amine chain extender | 0.2 | - | 2.0 |
| Total mass of: 402.0kg | | | | |

In the above formulation, the nano-filler is fumed silica to nano-calcium carbonate in a weight ratio of 0.05/1.

A production system for the one-component solvent-free anti-sagging polyurethane waterproof coating included a reaction kettle, a kneader, a forced feeder, a twin screw mixer, and a packaging machine, wherein both the reaction kettle and the kneader are connected to the forced feeder, the forced feeder is connected to the twin screw mixer and the twin screw mixer is connected to the packaging machine.
the forced feeder is provided with a first feeding port, a second feeding port, a third feeding port and a discharging port.
the first feeding port is connected to the reaction kettle, the second feeding port is connected to the kneader, the third feeding port is used for feeding raw materials, and the discharging port is connected to the twin screw mixer.
the reaction kettle, kneader and the twin screw mixer can be heated up and cooled down, and evacuated.

A production method for the one-component solvent-free anti-sagging polyurethane waterproof coating included the steps of:
(1) Preparation of polyurethane prepolymer:
   A. adding 50 kg of DL-400, 50 kg of DL-1000 and 150kg of DL-2000 to the reaction kettle, respectively, gradually increasing the temperature to 120°C under the stirring state, and vacuum dehydrating same for 2h;
   B. decreasing the temperature in the reaction kettle to no more than 60°C, continuing to add 50kg of MDI-MI and 50 kg of MDI 103c to the reaction kettle, and then increasing the temperature to 80 ± 2°C, reacting same for 1.5h under nitrogen protection while stirring;
   C. continuing to add 50 kg of EP-330N to the reaction kettle, after 1 hour of reaction, measuring the NCO content of the prepolymer; if it reached the theoretical value, stopping the reaction, otherwise continuing the reaction;
   D. adding 2 kg of 4,4'-bis(sec-butylamino)-dicyclohexylmethane to the reaction kettle and continuing the reaction for 1 hour to obtain the polyurethane prepolymer;
(2) Vacuum dehydrating: dehydrating 150 kg of a heavy filler, 5 kg of fumed silica, 100 kg of nano-calcium carbonate, 0.5 kg of magnesium oxide and 0.5 kg of calcium oxide, respectively by a kneader under -0.1MPA vacuum conditions at 160°C to a moisture content of no more than 0.05% for later use;
(3) Synthesis of the polyurethane waterproof coating:
   A. according to the metered amounts, adding 402 kg of a polyurethane prepolymer, 150 kg of a heavy filler, 5 kg of fumed silica, 100 kg of nano-calcium carbonate, 0.5 kg of magnesium oxide, 0.5 kg of calcium oxide, 100 kg of DINP, 0.5kg of a small molecular p-toluenesulfonyl isocyanate dehydrating agent, 20 kg of a reactive diluent, 1 kg of WD50, 2 kg of 066N, 0.5 kg of dibutyltin dilaurate, 0.3 kg of pentamethyldipropylene triamine, and 0.2 kg of stannous octoate, respectively to the forced feeder, then uniformly mixing same;
   B. adding the materials in the forced feeder to the twin-screw mixer according to the metered amounts, and stirring, dispersing, grinding and defoaming under the conditions of no more than 25°C and a vacuum degree of -0.09 to 0.1 MPa, and when the fineness of the material tested by the grindometer exceeds 50 um or more, the finished product is obtained;
(4) Packaging: packing the finished product by a packaging machine according to the production needs.

In such a case, in step (1), the DL-400, DL-1000 and DL-2000 are controlled to have a moisture content of no more than 0.05% after vacuum dehydration.

### Example 2

This example provides a one-component solvent-free anti-sagging polyurethane waterproof coating; the components of the coating and the masses of various component are as follows:

| Total components | Parts by weight | Fractional components | Mass/ kg |
|---|---|---|---|
| Polyurethane prepolymer | 43.2 | --- | 432.0 |
| Heavy filler | 10 | --- | 100.0 |
| Nano-filler | 20 | Gypsum whisker | 10.0 |
| | | Nano-calcium carbonate | 190.0 |
| Composite catalyst | 0.1 | Dibutyltin dilaurate | 0.5 |
| | | Pentamethyldipropylenetriamine | 0.5 |
| | | Stannous octoate | 0.5 |
| Physical defoamer | 0.2 | 5500 | 2.0 |
| Chemical defoamer | 0.1 | Magnesium oxide | 1.0 |
| Plasticizer | 5 | DINP | 50.0 |
| Dispersant | 0.1 | f108 | 1.0 |
| Dehydrating agent | 0.15 | Molecular sieve | 0.5 |
| | | Small molecular p-toluenesulfonyl isocyanate dehydrating agent | 1.0 |
| Reactive diluent | 2 | --- | 20.0 |
| Total mass of: 809.0kg | | | |

The components of the polyurethane prepolymer and the masses of various components are as follows:

| Total components | Fractional components | Weight ratio | Fractional components | Mass/ kg |
|---|---|---|---|---|
| Polyurethane prepolymer | Composite resin diol | 21 | DL-400 | 80.0 |
| | | | DL-1000D | 80.0 |
| | | | DL-2000D | 50.0 |
| | Polyether triol | 9 | EP-330N | 90.0 |
| | Composite isocyanate | 13 | MDI-50 | 80.0 |
| | | | TDI | 50.0 |
| | Aliphatic amine chain extender | 0.2 | --- | 2.0 |
| Total mass of: 432.0kg | | | | |

In the above formulation, the nano-filler is selected from a gypsum whisker and nano-calcium carbonate.

A production method for the one-component solvent-free anti-sagging polyurethane waterproof coating included the steps of:
(1) Preparation of polyurethane prepolymer:
   A. adding 80kg of DL-400, 80kg of DL-1000 and 50kg of DL-2000 to the reaction kettle, respectively, gradually increasing the temperature to 120°C under the stirring state, and vacuum dehydrating same for 2h;
   B. decreasing the temperature in the reaction kettle to no more than 60°C, continuing to add 80 kg of MDI-50 and 50 kg of TDI to the reaction kettle, and then increasing the temperature to 80 ± 2°C, reacting same for 1.5h under nitrogen protection while stirring;
   C. continuing to add 90kg of EP-330N to the reaction kettle, after 1 hour of reaction, measuring the NCO content of the prepolymer; if it reached the theoretical value, stopping the reaction, otherwise continuing the reaction;
   D. adding 2 kg of 4,4'-bis(sec-butylamino)-dicyclohexylmethane to the reaction kettle and continuing the reaction for 1 hour to obtain the polyurethane prepolymer;
(2) Vacuum dehydrating: dehydrating 100 kg of a heavy filler, 10 kg of a gypsum whisker, 190 kg of nano-calcium carbonate, 1 kg of magnesium oxide and 0.5 kg of a molecular sieve, respectively by a kneader under -0.1MPA vacuum conditions at 160°C to a moisture content of no more than 0.05% for later use;
(3) Synthesis of the polyurethane waterproof coating:
   A. according to the metered amounts, adding 432 kg of a polyurethane prepolymer, 100 kg of a heavy filler, 10 kg of a gypsum whisker, 190 kg of nano-calcium carbonate, 1 kg of magnesium oxide, 0.5 kg of a molecular sieve, 50 kg of DINP, 1 kg of a small molecular p-toluenesulfonyl isocyanate dehydrating agent, 20 kg of a reactive diluent, 1 kg of f108, 2 kg of 5500, 0.5 kg of dibutyltin dilaurate, 0.5 kg of pentamethyldipropylene triamine, and 0.5 kg of stannous octoate, respectively to the forced feeder, then uniforly mixing same;
   B. adding the materials in the forced feeder to the twin-screw mixer according to the metered amounts, and stirring, dispersing, grinding and defoaming under the conditions of no more than 25°C and a vacuum degree of -0.09 to 0.1 MPa, and when the fineness of the material tested by the grindometer exceeds 50 um or more, the finished product is obtained;
(4) Packaging: packing the finished product by a packaging machine according to the production needs.

### Example 3

This example provides a one-component solvent-free anti-sagging polyurethane waterproof coating; the components of the coating and the masses of various component are as follows:

| Total components | Parts by weight | Fractional components | Mass/kg |
|---|---|---|---|
| Polyurethane prepolymer | 39.3 | --- | 393.0 |
| Heavy filler | 20 | --- | 200.0 |
| Nano-filler | 21 | Gypsum whisker | 5.0 |
| | | Nano-calcium carbonate | 200.0 |
| | | Hydrophobically modified gas silicon | 5.0 |
| Composite catalyst | 0.06 | Pentamethyldipropylenetriamine | 0.1 |
| | | Stannous octoate | 0.5 |
| Physical defoamer | 0.2 | 5500 | 1.0 |
| | | 066N | 1.0 |
| Chemical defoamer | 0.3 | Magnesium oxide | 3.0 |
| Plasticizer | 15 | Chlorinated paraffin | 150.0 |
| Dispersant | 0.3 | f108 | 3.0 |
| Dehydrating agent | 0.2 | Molecular sieve | 2.0 |
| Reactive diluent | 5 | --- | 50.0 |
| Total mass of: 1013.6kg | | | |

The components of the polyurethane prepolymer and the masses of various components are as follows:

| Total components | Fractional components | Weight ratio | Fractional components | Mass/ kg |
|---|---|---|---|---|
| Polyurethane prepolymer | Composite resin diol | 22 | DL-400 | 100.0 |
| | | | DL-1000D | 20.0 |
| | | | DL-2000D | 100.0 |
| | Polyether triol | 2 | EP-330N | 20.0 |
| | Composite isocyanate | 15 | IPDI | 100.0 |
| | | | MDI 103c | 50.0 |
| | Aliphatic amine chain extender | 0.3 | --- | 3.0 |
| Total mass of: 393.0kg | | | | |

In the above formulation, the nano-filler is selected from a gypsum whisker, nano-calcium carbonate and hydrophobically modified gas silicon.

A production method for the one-component solvent-free anti-sagging polyurethane waterproof coating included the steps of:
(1) Preparation of polyurethane prepolymer:
   A. adding 100 kg of DL-400, 20 kg of DL-1000 and 100 kg of DL-2000 to the reaction kettle, respectively, gradually increasing the temperature to 120°C under the stirring state, and vacuum dehydrating same for 2h;
   B. decreasing the temperature in the reaction kettle to no more than 60°C, continuing to add 100 kg of IPDI and 50 kg of MDI 103c to the reaction kettle, and then increasing the temperature to 80 ± 2°C, reacting same for 1.5h under nitrogen protection while stirring;
   C. continuing to add 20kg of EP-330N to the reaction kettle, after 1 hour of reaction, measuring the NCO content of the prepolymer; if it reached the theoretical value, stopping the reaction, otherwise continuing the reaction; and
   D. adding 3kg of 4,4'-bis(sec-butylamino)-dicyclohexylmethane to the reaction kettle and continuing the reaction for 1 hour to obtain the polyurethane prepolymer;
(2) Vacuum dehydrating: dehydrating 200 kg of a heavy filler, 5 kg of a gypsum whisker, 200 kg of nano-calcium carbonate, 5 kg of hydrophobically modified gas silicon, 3 kg of magnesium oxide and 2 kg of molecular sieve, respectively by a kneader under -0.1MPA vacuum conditions at 160°C to a moisture content of no more than 0.05% for later use;
(3) Synthesis of the polyurethane waterproof coating:
   A. according to the metered amounts, adding 393 kg of a polyurethane prepolymer, 200 kg of a heavy filler, 5 kg of a gypsum whisker, 200 kg of nano-calcium carbonate, 5 kg of hydrophobically modified gas silicon, 3 kg of magnesium oxide, 2 kg of a molecular sieve, 150 kg of chlorinated paraffin, 50 kg of a reactive diluent, 3 kg of f108, 1 kg of 5500, 1 kg of 066N, 0.1 kg of pentamethyldipropylenetriamine, and 0.5 kg of stannous octoate, respectively to the forced feeder, then uniformly mixing same; and
   B. adding the materials in the forced feeder to the twin-screw mixer according to the metered amounts, and stirring, dispersing, grinding and defoaming under the conditions of no more than 25°C and a vacuum degree of -0.09 to 0.1 MPa, and when the fineness of the material tested by the grindometer exceeds 50 um or more, the finished product is obtained; and
(4) Packaging: packing the finished product by a packaging machine according to the production needs.

The physical properties of the one-component solvent-free anti-sagging polyurethane waterproof coatings produced by Comparative examples 1-3 are as follows:

| No. | Item | Standard (GB/T 19250-2013 "Polyurethane waterproof coating") | Example 1 | Example 2 | Example 3 |
|---|---|---|---|---|---|
| 1 | Viscosity/mpa.s (25°C) | --- | 25000 | 19500 | 18500 |
| 2 | Solid content/% | ≥85.0 | 98.2 | 98.7 | 98.9 |
| 3 | Surface drying time/h | ≤12 | 1.5 | 1 | 1 |
| 4 | Hard drying time/h | ≤24 | 2 | 2 | 2 |
| 5 | Tensile strength at day 7/MPa | ≥2 (Category I technical indicators) | 3.2 | 3.6 | 4.2 |
| | | ≥6 (Category II technical indicators) | | | |
| | | ≥12(Category III technical indicators) | | | |
| 6 | Elongation at break/% | ≥500 (Category I technical indicators) | 640 | 820 | 940 |
| | | ≥450 (Category II technical indicators) | | | |
| | | ≥250(Category III technical indicators) | | | |
| 7 | Tear strength (N/mm) | ≥15 (Category I technical indicators) | 17 | 25 | 27 |
| | | ≥30 (Category II technical indicators) | | | |
| | | ≥40(Category III technical indicators) | | | |
| 8 | Application situations after blade coating | --- | 1 mm thick coating at one time without flowing | 1.5mm thick coating at one time without flowing | 2mm thick coating at one time without flowing |

According to the physical properties of the coatings of Examples 1 to 3 in the table above, compared with the standard parameters, it can be seen that the physical properties of the polyurethane waterproof coatings produced by the above examples all meet the standards, the blade coating application is good, with a maximum of 2 mm of thick coating without flowing.

The beneficial effects of the present disclosure are as follows:
(1) the polyurethane waterproof coating designed by the present disclosure can not only be applied to a facade or a slope, has a strong anti-sagging property, but also can maintain good physical properties;
(2) the effect of the moisture of various raw materials on the system is accurately controlled by the pre-treatment of various materials, which can reduce the moisture in the system reaction and mixing process and increase of the viscosity of the system by crosslinking; and
(3) the continuous automatic production of materials is achieved through the twin-screw automatic production line system, which can improve the production efficiency and ensure the product quality.

### Comparative example 1

This comparative example changes the way of adding a polyether triol, and the components of the coating and the masses of various components are the same as in Example 1, only except that step (1) for preparing a polyurethane prepolymer in the preparation method of the one-component solvent-free anti-sagging polyurethane waterproof coating is changed to:
A. adding 50 kg of DL-400, 50 kg of DL-1000, 150 kg of DL-2000 and 50 kg of EP-330N to the reaction kettle, respectively, gradually increasing the temperature to 120°C under the stirring state, and vacuum dehydrating same for 2h;
B. decreasing the temperature in the reaction kettle to no more than 60°C, continuously adding 50 kg of MDI-MI and 50 kg of MDI 103c to the reaction kettle, and then increasing the temperature to 80 ± 2°C, reacting same for 2.5h under nitrogen protection while stirring, then measuring the NCO content of the prepolymer; if it reached the theoretical value, stopping the reaction, otherwise continuing the reaction; and
C. adding 2 kg of 4,4'-bis(sec-butylamino)-dicyclohexylmethane to the reaction kettle and continuing the reaction for 1 hour to obtain the polyurethane prepolymer.

The physical parameters of the coating obtained by comparative example 1 are compared with those of example 1, and the results are as follows:

| No. | Item | Standard (GB/T 19250-2013 "Polyurethane waterproof coating") | Example 1 | Comparative example 1 |
|---|---|---|---|---|
| 1 | Viscosity/mpa.s (25°C) | --- | 25000 | 89000 |
| 2 | Solid content/% | ≥85.0 | 98.2 | 98.3 |
| 3 | Surface drying time/h | ≤12 | 1.5 | 2 |
| 4 | Hard drying time/h | ≤24 | 2 | 3 |
| 5 | Tensile strength at day 7/MPa | ≥2 (Category I technical indicators) | 3.2 | 2.4 |
| | | ≥6 (Category II technical indicators) | | |
| | | ≥12(Category III technical indicators) | | |
| 6 | Elongation at break/% | ≥500 (Category I technical indicators) | 640 | 520 |
| | | ≥450 (Category II technical indicators) | | |
| | | ≥250(Category III technical indicators) | | |
| 7 | Tear strength (N/mm) | ≥15 (Category I technical indicators) | 17 | 13 |
| | | ≥30 (Category II technical indicators) | | |
| | | ≥40(Category III technical indicators) | | |
| 8 | Application situations after blade coating | --- | 1 mm thick coating at one time without flowing | 1 mm thick coating at one time without flowing, but the application is relatively difficult |

It can be seen from the comparison of the physical properties of the polyurethane waterproof coatings produced in Example 1 and Comparative Example 1 that, the tear strength (13 N/mm) of Comparative Example 1 is lower than the standard value (17 N/mm), but other physical properties meet the standards, but are still lower than the performance parameters of Example 1, and the coating is too viscous, the blade coating application is poor.

It can be seen that the performance of the polyurethane waterproof coating obtained by preparing the polyurethane prepolymer by the stepwise polymerization method is better than that of the coating prepared by the one step polymerization method in Comparative Example 1. the polyurethane prepolymer prepared by stepwise polymerization has a lower viscosity, and a high degree of polymerization, due to the relatively regular "soft segment" (polyether chain segment) and "hard segment" (isocyanate) in the prepolymer of the stepwise polymerization, and a narrow molecular weight distribution, and the low viscosity facilitates the production control.

### Comparative examples 2 and 3

In the comparative examples 2 and 3, only the weight ratio of the fumed silica to nano-calcium carbonate is changed, and the other components of the coating and the masses of the various components are the same as those in the Example 1. The weight ratio and mass of the fumed silica to nano calcium carbonate are shown in the table below:

| No. | Physical properties | Standard (GB/T 19250-2013 "Polyurethane waterproof coating") | Example 1 | Comparative example 2 | Comparative example 3 |
|---|---|---|---|---|---|
| 1 | Weight ratio of fumed silica to nano-calcium carbonate | --- | 0.05/1 | 0.038/1 | 0.083/1 |
| 2 | Mass of fumed silica/kg | --- | 5 | 3.8 | 8.3 |
| 3 | Mass of nano-calcium carbonate/kg | --- | 100 | 100 | 100 |
| 4 | Solid content/% | ≥85.0 | 98.2 | 98.2 | 98.2 |
| 5 | Surface drying time/h | ≤12 | 1.5 | 1.5 | 1.5 |
| 6 | Hard drying time/h | ≤24 | 2 | 2 | 2 |
| 7 | Tensile strength at day 7/MPa | ≥2 (Category I technical indicators) ≥6 (Category II technical indicators) ≥ 12(Category III technical indicators) | 3.2 | 2.8 | 2.1 |
| 8 | Elongation at break/% | ≥500 (Category I technical indicators) ≥450 (Category II technical indicators) ≥250(Category III technical indicators) | 640 | 610 | 500 |
| 9 | Tear strength (N/mm) | ≥15 (Category I technical indicators) ≥30 (Category II technical indicators) ≥40(Category III technical indicators) | 17 | 16 | 14 |
| 10 | Application situations after blade coating | --- | 1 mm thick coating at one time without flowing. | 1 mm thick coating at one time without flowing, but the high viscosity makes it difficult to apply. | 1 mm thick coating at one time with 1 cm flowing. |

By comparing the application conditions of the polyurethane waterproof coatings produced in Example 1 and Comparative Examples 2 and 3, it can be seen that when the weight ratio of the fumed silica to nano-calcium carbonate is less than the specified range of 0.038/1 in Comparative Example 2, although all the physical performance parameters meet the standards, they are still inferior to Example 1 and the high viscosity makes it difficult to apply; In Comparative Example 3, when the weight ratio of the fumed silica to the nano-calcium carbonate is greater than the specified range of 0.083/1, the tear strength value (14 N/mm) is lower than the standard value (≥15 N/mm); although all other physical performance parameters meet the standard, the application is not good, 1 mm thick coating at one time with 1 cm flowing.

It can be seen that when the weight ratio of the fumed silica to nano-calcium carbonate exceeds the range of 0.045-0.08 : 1, not only the physical properties of the coating is affected, but also poor application will be caused. The present disclosure further improves the anti-sagging property and other physical properties of the coating by controlling the proportion of the nano filler and the heavy filler.

Finally, it should be noted that the above description is only a preferred embodiment of the present disclosure and is not intended to limit the present disclosure. Although the present disclosure has been described in detail with reference to the foregoing embodiments, for those skilled in the art, the technical solutions described in the foregoing embodiments may still be modified or some technical features therein may be equivalently replaced. Any modification, equivalent substitution, improvement, and the like made within the spirit and principle of the present disclosure shall be included into the protection scope of the present disclosure.

## Claims

1. A one-component solvent-free anti-sagging polyurethane waterproof coating, wherein the polyurethane waterproof coating comprises the following components in parts by weight of: 25-50 parts of a polyurethane prepolymer, 10-20 parts of a heavy filler, 10-20 parts of a nano-filler, 0.05-0.2 parts of a composite catalyst, 0.1-0.3 parts of a physical defoamer, 0.1-0.3 parts of a chemical defoamer, 5-20 parts of a plasticizer, 0.1-0.3 parts of a dispersant, 0.05-0.2 parts of a dehydrating agent, and 2-5 parts of a reactive diluent, the polyurethane prepolymer is made by reacting 19-72 parts of a composite resin diol, 1-10 parts of a polyether triol, 0-32 parts of a composite isocyanate, and 0.1-0.5 parts of an aliphatic amine chain extender, and the nano-filler is any combination of gypsum whisker, fumed silica, nano-calcium carbonate, nano-aluminum nitride, nano-boron nitride, nano-aluminum borate, and hydrophobically modified gas silicon, and the weight ratio of the fumed silica to nano-calcium carbonate is 0.045-0.08 : 1.

2. The one-component solvent-free anti-sagging polyurethane waterproof coating according to claim 1, wherein the composite resin diol comprises the following components in parts by weight of: 8-22 parts of a polypropylene oxide ether diol having a molecular weight of 400, 3-18 parts of a polypropylene oxide ether diol having a molecular weight of 1000, and 8-32 parts of a polypropylene oxide ether diol having a molecular weight of 2000.

3. The one-component solvent-free anti-sagging polyurethane waterproof coating according to claim 1, wherein the polyether triol is a polypropylene oxide ether triol having a molecular weight of 3000-5000.

4. The one-component solvent-free anti-sagging polyurethane waterproof coating according to claim 1, wherein the composite isocyanate comprises 0-10 parts of a first isocyanate and 0-8 parts of a second isocyanate, the first isocyanate is any one of pure diphenylmethane diisocyanate, isophorone diisocyanate, and a mixture of 2, 4'-diphenylmethane diisocyanate and 4,4'-diphenylmethane diisocyanate, and the second isocyanate is any one of a modified diphenylmethane diisocyanate, hexamethylene diisocyanate, and toluene diisocyanate.

5. The one-component solvent-free anti-sagging polyurethane waterproof coating according to claim 1, wherein the reactive diluent is an oxazolidine reactive diluent.

6. The one-component solvent-free anti-sagging polyurethane waterproof coating according to claim 1, wherein the composite catalyst comprises 0-10 parts of dibutyltin dilaurate, 0-3 parts of stannous octoate, 0-5 parts of an environmentally friendly non-butyltin catalyst, 0-10 parts of a bismuth carboxylate catalyst, 0-5 parts of zinc naphthenate, 0-5 parts of pentamethyldipropylenetriamine, 0-10 parts of tetramethylethylenediamine, and 0-8 parts of a bismorpholine organic amine catalyst.

7. The one-component solvent-free anti-sagging polyurethane waterproof coating according to claim 1, wherein the dehydrating agent comprises 0-5 parts of a solid dehydrating agent and 0-3 parts of a liquid dehydrating agent, the solid dehydrating agent includes a molecular sieve or heavy calcium oxide, and the liquid dehydrating agent includes a small molecular p-toluenesulfonyl isocyanate dehydrating agent.

8. The one-component solvent-free anti-sagging polyurethane waterproof coating according to claim 1, wherein the plasticizer is any one of diisononyl phthalate, diisodecyl phthalate, chlorinated paraffin, a vegetable oil, dioctyl adipate, glycol benzoate, trioctyl phosphate and phenyl alkylsulfonate.

9. The one-component solvent-free anti-sagging polyurethane waterproof coating according to claim 1, wherein the chemical defoamer comprises 0-5 parts of magnesium oxide and 0-2 parts of calcium oxide.

10. A production system for one-component solvent-free anti-sagging polyurethane waterproof coating according to any one of claims 1-9, wherein it includes a reaction kettle, a kneader, a forced feeder, a twin screw mixer, and a packaging machine, wherein both the reaction kettle and the kneader are connected to the forced feeder, the forced feeder is connected to the twin screw mixer and the twin screw mixer is connected to the packaging machine.

11. The production system for the one-component solvent-free anti-sagging polyurethane waterproof coating according to claim 10, wherein the forced feeder is provided with a first feeding port, a second feeding port, a third feeding port and a discharging port.

12. The production system for the one-component solvent-free anti-sagging polyurethane waterproof coating according to claim 11, wherein the first feeding port is connected to the reaction kettle, the second feeding port is connected to the kneader, the third feeding port is used for feeding raw materials, and the discharging port is connected to the twin screw mixer.

13. The production system for the one-component solvent-free anti-sagging polyurethane waterproof coating according to claim 10, wherein the reaction kettle, kneader and the twin screw mixer can be heated up and cooled down, and evacuated.

14. A production method for the one-component solvent-free anti-sagging polyurethane waterproof coating according to claim 10, wherein the method comprises the steps of:
(1) Preparation of polyurethane prepolymer:
A. adding a formulation amount of composite resin diol to the reaction kettle, gradually increasing the temperature to 120°C under the stirring state, and vacuum dehydrating same for 2h;
B. decreasing the temperature in the reaction kettle to no more than 60°C, continuing to add a formulation amount of composite isocyanate to the reaction kettle, and then increasing the temperature to 80 ± 2°C, reacting for 1.5h under nitrogen protection while stirring;
C. continuing to add a formulation amount of polyether triol to the reaction kettle, after 1 hour of reaction, measuring the NCO content of the prepolymer; if it reaches the theoretical value, stopping the reaction, otherwise continuing the reaction; and
D. adding a formulation amount of an aliphatic amine chain extender to the reaction kettle and continuing the reaction for 1 hour to obtain the polyurethane prepolymer;
(2) Vacuum dehydrating: dehydrating a formulation amount of heavy filler and nano-filler, respectively by a kneader under -0.1MPA vacuum conditions at 160°C to a moisture content of no more than 0.05% for later use;
(3) Synthesis of the polyurethane waterproof coating:
A. adding the formulation amounts of the polyurethane prepolymer, heavy filler, nano-filler, plasticizer, dehydrating agent, reactive diluent, dispersant, physical defoamer and composite catalyst to the forced feeder according to the metered amounts, respectively, then uniformly mixing same; and
B. adding the materials in the forced feeder to the twin-screw mixer according to the metered amounts, and stirring, dispersing, grinding and defoaming under the conditions of no more than 25°C and a vacuum degree of -0.09 to 0.1 MPa, and when the fineness of the material tested by the grindometer exceeds 50 um or more, the finished product is obtained; and
(4) Packaging: packing the finished product by a packaging machine according to the production needs.

15. The production method for the one-component solvent-free anti-sagging polyurethane waterproof coating according to claim 14, wherein in step (1), the composite resin diol is controlled to have a moisture content of no more than 0.05% after vacuum dehydration.

16. The production method for the one-component solvent-free anti-sagging polyurethane waterproof coating according to claim 14, wherein step (2) further includes adding a chemical defoamer and dehydrating same together through a kneader.

17. The production method for the one-component solvent-free anti-sagging polyurethane waterproof coating according to claim 14, wherein step (2) further includes adding a solid dehydrating agent and dehydrating same together through a kneader.
